# EUROPEAN PATENT APPLICATION

(11) **EP 3 223 529 A1**
(43) Date of publication of application: **27.09.2017**
(21) Application number: 15861835.5
(22) Date of filing: 11.11.2015
(51) Int. Cl.: H04N 21/436

(54) **VIDEO PROCESSING SYSTEM, TRANSMISSION DEVICE, VIDEO PROCESSING METHOD, TRANSMISSION METHOD, AND RECORDING MEDIUM**

(30) Priority: 17.11.2014 JP 2014232563
(71) Applicant: NEC Corporation, Tokyo 108-8001 (JP)
(72) Inventor: KEZUKA, Terusumi, Tokyo 108-8001 (JP); TANAKA, Ryohei, Tokyo 108-8001 (JP)
(74) Representative: Vossius & Partner Patentanwälte Rechtsanwälte mbB
(86) International application number: PCT/JP2015/005616
(87) International publication number: WO 2016/079949

(57) **Abstract**

Provided is a technique for improving the complexities, sizes, weights and costs of devices. A video processing system includes a transmission device and a video output device. The transmission device includes: an audio signal generation unit that generates, as an audio signal, a control signal for controlling the operation of a light source in accordance with a video signal; a combined signal generation unit that generates, on the basis of the video signal and the audio signal, a combined signal; and a transmission unit that transmits the combined signal via a predetermined interface that can simultaneously transmit audio and video signals. The video output device includes: a reception unit that receives the combined signal; a separation unit that separates the received combined signal into the video signal and the audio signal; a conversion unit that converts the audio signal to the control signal; and a control unit that controls the operation of the light source on the basis of the control signal as converted.

## Description

### Technical Field

The present invention relates to a video processing system, a transmission device, a video processing method, a transmission method, and a recording method.

### Background Art

Communication based on the high-definition multimedia interface (HDMI (registered trademark)) standard, for example, is performed between a transmission device (video generation device) generating and transmitting video and a reception device (video output device) receiving and projecting (outputting) the video to the outside. A method of performing communication based on the HDMI standard is described in PTL 1, for example.

### Citation List

### Patent Literature

PTL 1: International Patent Publication WO 2009/125573

### Summary of Invention

### Technical Problem

There exists increasing demand for the video output device, which outputs highly controlled video by transmitting from the video generation device to the video output device, a control signal controlling output of video. Such a video output device sometimes uses an image modulation device using a reflective liquid crystal element (e.g., a liquid crystal on silicon (LCOS (registered trademark))), and a light source (e.g., a laser), for example, as a method of outputting (projecting) video. At this time, the video generation device transmits to the video output device a control signal for controlling the laser to thereby control output of the video output device with high accuracy.

In order to transmit a control signal, for example, a control interface of the recommended standard (RS) 232C or the like however needs to be added, and thus results in a problem that each device increases in complexity and size, and highly increases in weight and cost.

In view of the above-described issue, the present invention has been made, and its object is to provide a technique of improving a device in terms of complexity, a size, a weight, and cost.

### Solution to Problem

A video processing system according to one aspect of the present invention includes: a transmission device that transmits a video signal; and a video output device that is connected to the transmission device via a predetermined interface capable of simultaneously transmitting an audio signal and a video signal, and that outputs the video signal to an outside. The transmission device includes: audio signal generation means for generating, as an audio signal, a control signal controlling operation of a light source in accordance with the video signal; combined signal generation means for generating a combined signal based on the video signal and the audio signal; and transmission means for transmitting the combined signal to the video output device via the predetermined interface. The video output device includes: reception means for receiving the combined signal transmitted via the predetermined interface; separation means for separating the received combined signal into the video signal and the audio signal; conversion means for converting the audio signal into the control signal; and control means for controlling operation of the light source based on the control signal converted by the conversion means.

A transmission device according to one aspect of the present invention includes: audio signal generation means for generating, as an audio signal, a control signal controlling operation of a light source in accordance with a video signal; combined signal generation means for generating a combined signal based on the video signal and the audio signal; and transmission means for transmitting the combined signal, via a predetermined interface capable of simultaneously transmitting an audio signal and a video signal, to a video output device controlling operation of the light source based on the control signal to thereby output the video signal to an outside.

A video processing method according to one aspect of the present invention includes: generating, as an audio signal, a control signal controlling operation of a light source in accordance with a video signal; generating a combined signal based on the video signal and the audio signal; transmitting the combined signal via a predetermined interface capable of simultaneously transmitting the audio signal and the video signal; receiving the combined signal transmitted via the predetermined interface; separating the received combined signal into the video signal and the audio signal; converting the audio signal into the control signal; and controlling operation of the light source based on the converted control signal to output the video signal to an outside.

A transmission method according to one aspect of the present invention includes: generating, as an audio signal, a control signal controlling operation of a light source in accordance with a video signal; generating a combined signal based on the video signal and the audio signal; and transmitting the combined signal, via a predetermined interface capable of simultaneously transmitting an audio signal and a video signal, to a video output device controlling operation of the light source based on the control signal to thereby output the video signal to an outside.

Categories of the present invention include a computer program for implementing the above-described system, device, or method by a computer, and include a computer-readable recording medium that stores the computer program.

### Advantageous Effects of Invention

According to the present invention, a device can be improved in terms of complexity, a size, a weight, and cost.

### Brief Description of Drawings

Fig. 1 is a functional block diagram illustrating one example of a functional configuration of a video processing system according to a first example embodiment of the present invention.
Fig. 2 is a flowchart illustrating one example of a flow of a process of a video generation device in the video processing system according to the first example embodiment of the present invention.
Fig. 3 is a flowchart illustrating one example of a flow of a process of a video output device in the video processing system according to the first example embodiment of the present invention.
Fig. 4 is a functional block diagram illustrating one example of a functional configuration of a video processing system according to a second example embodiment of the present invention.
Fig. 5 is a diagram illustrating a hardware configuration that implements each of the example embodiments by a computer device.

### Example Embodiment

### <First Example Embodiment>

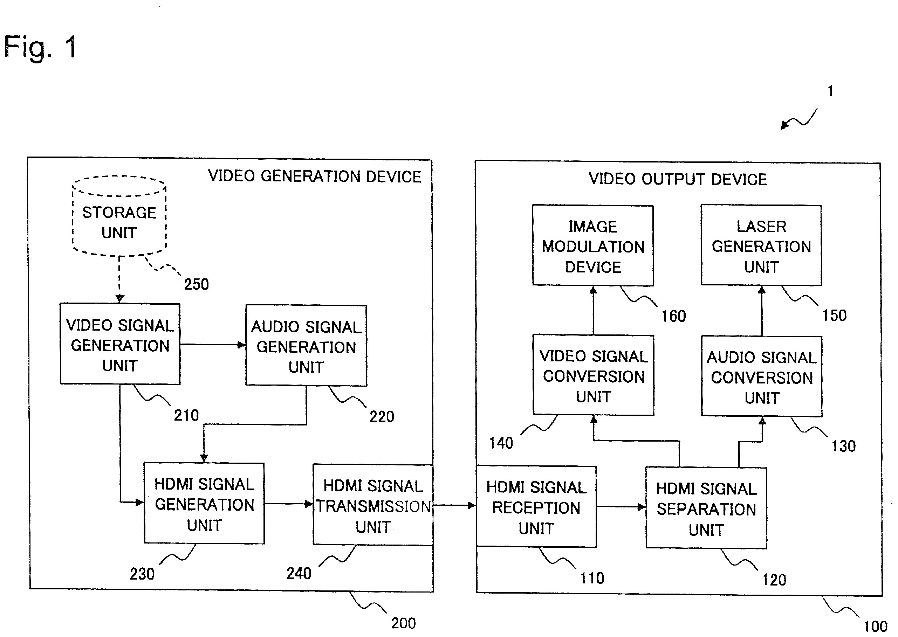

A first example embodiment of the present invention is described in detail with reference to the drawings. Fig. 1 is a functional block diagram illustrating one example of a functional configuration of a video processing system 1 according to the present example embodiment. Directions of arrows in the drawing indicate one example, and do not limit directions of signals between blocks. Similarly, also in another block diagram referred to in the following, directions of arrows in the drawing indicate one example, and do not limit directions of signals between blocks.

As illustrated in Fig. 1, the video processing system 1 includes a video output device 100 outputting a video signal to the outside, and a video generation device (transmission device) 200 transmitting a video signal to the video output device 100. The video output device 100 and the video generation device 200 are connected to each other via an interface based on the high-definition multimedia interface (HDMI (registered trademark)) standard so as to communicate with each other. A medium of the connection between the video output device 100 and the video generation device 200 may be wired or wireless one. It is sufficient that the video output device 100 and the video generation device 200 are connected to each other by a signal transmission method in which a control interface represented in the recommended standard (RS) 232C is not used, and in which a video signal and an audio signal can be transmitted simultaneously.

For convenience of the description, an example in which the video output device 100 and the video generation device 200 are provided one by one in Fig. 1 is cited to make description, but a plurality of the video output devices 100 and a plurality of the video generation devices 200 may be provided.

### (Video Generation Device 200)

First, description is made on a functional configuration of the video generation device 200. As illustrated in Fig. 1, the video generation device 200 includes a video signal generation unit 210, an audio signal generation unit 220, an HDMI signal generation unit (combined signal generator) 230, and an HDMI signal transmission unit 240.

The video signal generation unit 210 generates a video signal from an input video. The video signal includes signals representing respective images (input images) included in the input video. The video signal generation unit 210 generates, from the input image, a control signal for controlling operation of a light source (e.g., a laser) when the input video is output (projected) to the outside of the video output device 100 and the video generation device 200. Concretely, the video signal generation unit 210 acquires, from the input images, information indicating timings (times) of displaying the respective input images, information indicating color saturation, luminosity, and the like of respective pixels, which are adjusted at the time of projecting the respective input images, and the like, and uses the acquired information to generate the control signal. Information included in the control signal is not limited to this. For example, the video signal generation unit 210 may generate a control signal that includes information indicating a quantity of light emitted from the light source to the input image. The video signal generation unit 210 generates this control signal so as to synchronize with the video signal.

Then, the video signal generation unit 210 outputs the generated video signal to the HDMI signal generation unit 230. Further, the video signal generation unit 210 outputs the generated control signal to the audio signal generation unit 220. Instead of generating the control signal, the video signal generation unit 210 may output, to the audio signal generation unit 220, information (referred to also as control information) that is used in generating the control signal and that is made to synchronize with the video signal.

The audio signal generation unit 220 receives, from the video signal generation unit 210, the control signal synchronizing with the video signal. Then, the audio signal generation unit 220 generates the received control signal as an audio signal including a component in a band for audio. In other words, the audio signal generation unit 220 converts the received control signal into the audio signal.

When receiving control information from the video signal generation unit 210, the audio signal generation unit 220 may generate the audio signal based on the control information.

The audio signal generation unit 220 outputs the generated audio signal to the HDMI signal generation unit 230.

The HDMI signal generation unit 230 receives the video signal from the video signal generation unit 210. Further, the HDMI signal generation unit 230 receives the audio signal from the audio signal generation unit 220. Based on the received video signal and audio signal, the HDMI signal generation unit 230 generates an HDMI signal (combined signal). Concretely, the HDMI signal generation unit 230 combines the video signal with the audio signal to make conversion into an HDMI signal in an HDMI format. At this time, the HDMI signal generation unit 230 preferably generates the HDMI signal such that the video signal and the audio signal are transmitted in predetermined bands, respectively. The predetermined bands may be unused bands in a band of the HDMI signal. Thereby, the video output device 100 can more effectively use a band that can be used by the HDMI signal. The HDMI signal generation unit 230 outputs the generated HDMI signal to the HDMI signal transmission unit 240.

The HDMI signal transmission unit 240 receives the HDMI signal from the HDMI signal generation unit 230. Then, the HDMI signal transmission unit 240 transmits the received HDMI signal to the video output device 100. The HDMI signal transmission unit 240 is implemented by an HDMI connector or the like, for example.

For example, the input video from which the video signal generation unit 210 generates a video signal may be video stored in a storage unit 250 included in the video generation device 200. As another option, the input video may be video received by the video generation device 200 from the outside via a communication interface not illustrated in the drawings.

Although the description is made above citing the example in which the video signal generation unit 210 generates the control signal (or control information) from the input video, the present example embodiment is not limited to this. The control signal (or control information) may be input to the video generation device 200 from the outside.

### (Video Output Device 100)

Next, description is made on a functional configuration of the video output device 100. As illustrated in Fig. 1, the video output device 100 includes an HDMI signal reception unit 110, an HDMI signal separation unit 120, an audio signal conversion unit 130, a video signal conversion unit 140, a laser generation unit (control unit) 150, and an image modulation device 160.

The HDMI signal reception unit 110 receives the HDMI signal transmitted from the video generation device 200. The HDMI signal reception unit 110 is implemented by an HDMI connector or the like, for example. The HDMI signal reception unit 110 outputs the received HDMI signal to the HDMI signal separation unit 120.

The HDMI signal separation unit 120 separates the HDMI signal received from the HDMI signal reception unit 110, into a video component and an audio component. Concretely, the HDMI signal separation unit 120 separates the received HDMI signal into the component in a band for video and the component in the band for audio. Then, the HDMI signal separation unit 120 outputs the video component as a video signal to the video signal conversion unit 140. Further, the HDMI signal separation unit 120 outputs the audio component as an audio signal to the audio signal conversion unit 130.

The video signal conversion unit 140 receives the video signal from the HDMI signal separation unit 120. In accordance with the received video signal, the video signal conversion unit 140 converts this signal into a drive signal driving the image modulation device 160, and supplies this drive signal to the image modulation device 160 to thereby drive the image modulation device 160.

The audio signal conversion unit 130 receives the audio signal from the HDMI signal separation unit 120. The audio signal conversion unit 130 converts the received audio signal into a control signal for controlling operation of the light source. Then, the audio signal conversion unit 130 outputs the converted control signal to the laser generation unit 150. For example, the audio signal conversion unit 130 outputs the control signal that controls the starts and the ends of emission of the laser light in accordance with the information indicating the timings of displaying the input images, and that controls intensity of the laser light based on information indicating color saturation and luminosity of the respective pixels of the input images.

The laser generation unit 150 receives the control signal from the audio signal conversion unit 130. Based on the received control signal, the laser generation unit 150 controls intensity of the light source (laser in the present example embodiment) in synchronization with the video signal. Based on this control, the laser generates laser light to emit the laser light to the image modulation device 160.

The image modulation device 160 is a device formed using a reflective liquid crystal element (e.g., a liquid crystal on silicon (LCOS (registered trademark))), for example. The image modulation device 160 is irradiated with the laser light by the laser generation unit 150 to thereby generate video to be output.

Then, rays of the video generated by the image modulation device 160 are output as projection light from the video output device 100. Thereby, the video output device 100 can project the video to the outside.

### (Flow of Process of Video Generation Device 200)

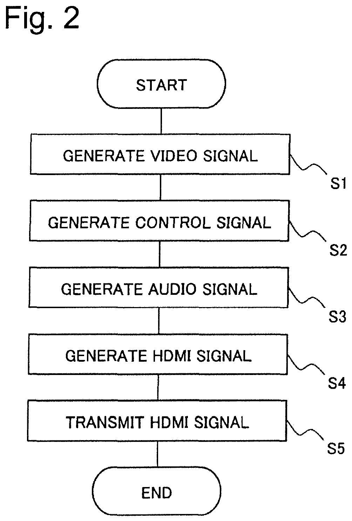

Next, with reference to Fig. 2, description is made on a flow of a process of the video generation device 200 in the video processing system 1 according to the present example embodiment. Fig. 2 is a flowchart illustrating one example of the flow of the process of the video generation device 200 in the video processing system 1 according to the present example embodiment.

As illustrated in Fig. 2, the video signal generation unit 210 of the video generation device 200 generates a video signal (step S1). Further, the video signal generation unit 210 generates a control signal (step S2). When the control signal is generated outside, the video signal generation unit 210 performs operation of receiving the control signal from the outside, instead of the step S2.

Based on the control signal generated by the video signal generation unit 210 at the step S2, the audio signal generation unit 220 generates an audio signal (step S3). Then, from the video signal generated at the step S1 and the audio signal generated at the step S3, the HDMI signal generation unit 230 generates an HDMI signal (step S4).

Then, the HDMI signal transmission unit 240 transmits the HDMI signal generated at the step S4, to the video output device 100 (step S5). By the above, the video generation device 200 ends the process.

### (Flow of Process of Video Output Device 100)

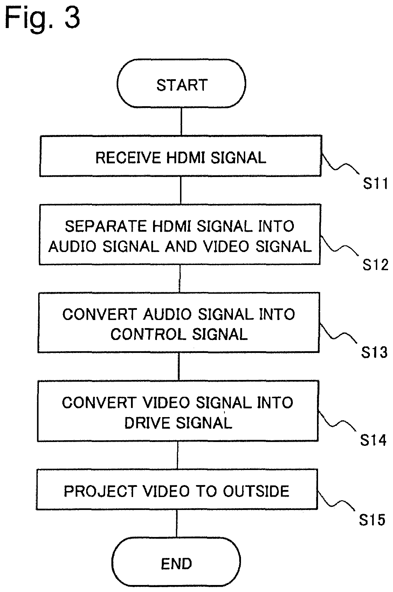

Next, with reference to Fig. 3, description is made on a flow of a process of the video output device 100 in the video processing system 1 according to the present example embodiment. Fig. 3 is a flowchart illustrating one example of the flow of the process of the video output device 100 in the video processing system 1 according to the present example embodiment.

As illustrated in Fig. 3, the HDMI signal reception unit 110 of the video output device 100 receives the HDMI signal (step S11). Then, the HDMI signal separation unit 120 separates the HDMI signal received by the HDMI signal reception unit 110 at the step S11, into an audio signal and a video signal (step S12).

The audio signal conversion unit 130 converts the separated audio signal into a control signal (step S13). Further, the video signal conversion unit 140 converts the separated video signal into a drive signal driving the image modulation device 160 (step S14). The step S13 and the step S14 may be performed simultaneously, or be performed in the reverse order.

Then, based on the control signal, the laser generation unit 150 controls the laser, and based on the drive signal, the video signal conversion unit 140 drives the image modulation device 160 so that the video generation device 200 outputs (projects) video to the outside (step S15).

### (Effects)

By the above, according to the video processing system 1 of the present example embodiment, it is possible to improve each device in terms of complexity, a size, a weight, and cost.

This is because the video generation device 200 generates, as an audio signal, a control signal controlling operation of a light source in accordance with a video signal, and using an HDMI, transmits a HDMI signal generated based on the generated audio signal and the video signal. This is also because the video output device 100 then receives the HDMI signal transmitted using the HDMI, separates the HDMI signal into the audio signal and the video signal, converts the audio signal into the control signal, and based on the control signal, controls the light source.

Thereby, the video generation device 200 in the video processing system 1 according to the present example embodiment can transmit the control signal controlling the light source, to the video output device 100, without using a dedicated interface including a signal line for transmitting the control signal. Thus, according to the present example embodiment, since the dedicated interface is not used, reduction in size and weight of each device can be attained. Further, since it is unnecessary to construct each device so as to use the dedicated interface, a configuration of each device can be simplified, and manufacturing cost of each device can be reduced.

Further, since such a dedicated control interface is not used, consumption of electric power used by the interface can be reduced.

### <Second Example Embodiment>

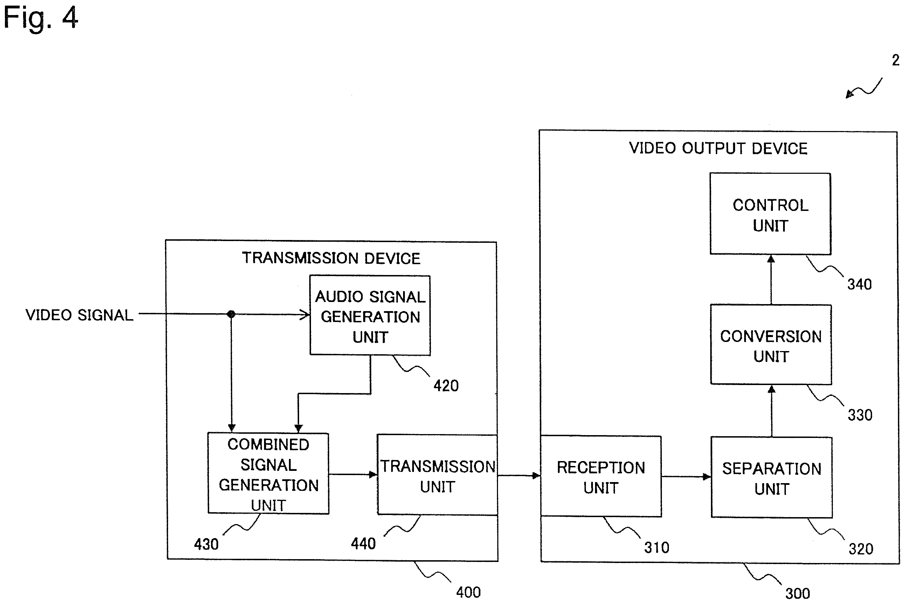

A second example embodiment of the present invention is described in detail with reference to the drawings. In the present example embodiment, a minimum configuration for solving the issue of the present invention is described. Fig. 4 is a functional block diagram illustrating one example of a functional configuration of a video processing system 2 according to the present example embodiment. As illustrated in Fig. 4, the video processing system 2 includes a video output device 300 outputting a video signal to the outside, and a transmission device 400 transmitting a video signal to the video output device 300.

The video output device 300 and the transmission device 400 are connected to each other, via a predetermined interface capable of transmitting an audio signal and a video signal simultaneously, so as to communicate with each other. The predetermined interface is an interface based on the HDMI standard, for example.

The transmission device 400 includes an audio signal generation unit 420, a combined signal generation unit 430, and a transmission unit 440. The audio signal generation unit 420 generates, as an audio signal, a control signal controlling operation of a light source in accordance with a video signal. The combined signal generation unit 430 generates a combined signal based on the video signal and the audio signal generated by the audio signal generation unit 420. The transmission unit 440 transmits the combined signal generated by the combined signal generation unit 430, to the video output device via the predetermined interface.

The video output device 300 includes a reception unit 310, a separation unit 320, a conversion unit 330, and a control unit 340. The reception unit 310 receives the combined signal transmitted via the predetermined interface. The separation unit 320 separates the combined signal received by the reception unit 310, into a video signal and an audio signal. The conversion unit 330 converts the audio signal out of the signals separated by the separation unit 320, into the control signal controlling operation of the light source. The control unit 340 controls operation of the light source based on the control signal converted by the conversion unit 330.

Light emitted from the light source controlled by the control unit 340 is made incident on an image modulation device provided inside or outside the video output device 300 so that the video output device 300 outputs video to the outside of the image output device 300 and the transmission device 400.

Thereby, the video processing system 2 according to the present example embodiment can obtain the same effects as those in the video processing system 1 according to the above-described first example embodiment.

### (Regarding Hardware Configuration)

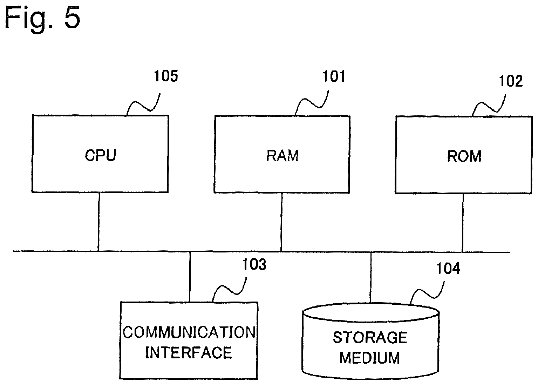

Each unit of the respective devices (video output device 100, the video generation device 200, the video output device 300, and the transmission device 400) in the video processing system illustrated in Fig. 1 or Fig. 4 may be implemented by hardware resources exemplified in Fig. 5. In other words, a configuration illustrated in Fig. 5 includes a random access memory (RAM) 101, a read-only memory (ROM) 102, a communication interface 103, a storage medium 104, and a central processing unit (CPU) 105. The CPU 105 reads out, to the RAM 101, various kinds of software programs (computer programs) stored in the ROM 102 or the storage medium 104 and executes the read programs to manage entire operation of each device. In other words, in each of the above-described example embodiments, the CPU 105 executes a software program of performing each function (each unit) provided in each device, while appropriately referring to the ROM 102 or the storage medium 104.

Computer programs that can implement the above-described functions are given to the respective devices, and the CPU 105 then reads out the computer programs to the RAM 101 and executes the read programs so that each of the example embodiments is realized.

The given computer programs may be stored in a readable and writable memory (transitory storage medium) or a computer-readable storage device such as a hard disk device. In such a case, it can be regarded that each of the example embodiments of the present invention is configured by the storage medium that stores the computer programs or codes expressing the computer programs.

In each of the above-described example embodiments, the case where the function represented by each block in each device illustrated in Fig. 1 or Fig. 4 is implemented by the software program is described as one example of a case in which the function is performed by the CPU 105 illustrated in Fig. 5. However, a part or all of the function represented by each block illustrated in Fig. 5 may be implemented as a circuit of hardware.

Each of the above-described example embodiments is a preferred example embodiment of the present invention. The scope of the present invention is not limited only to each of the above-described example embodiments, and a person skilled in the art can make modification and substitution in each of the above-described example embodiments within a scope that does not depart from the substance of the present invention, and can construct variously changed configurations.

This application claims priority based on Japanese patent application No. 2014-232563 filed on November 17, 2014, entire disclosure of which is incorporated herein.

### Reference signs List

- 1: Video processing system
- 100: Video output device
- 110: HDMI signal reception unit
- 120: HDMI signal separation unit
- 130: Audio signal conversion unit
- 140: Video signal conversion unit
- 150: Laser generation unit
- 160: Image modulation device
- 200: Video generation device
- 210: Video signal generation unit
- 220: Audio signal generation unit
- 230: HDMI signal generation unit
- 240: HDMI signal transmission unit
- 250: Storage unit
- 2: Video processing system
- 300: Video output device
- 310: Reception unit
- 320: Separation unit
- 330: Conversion unit
- 340: Control unit
- 400: Transmission device
- 420: Audio signal generation unit
- 430: Combined signal generation unit
- 440: Transmission unit

## Claims

1. A video processing system comprising:
a transmission device that transmits a video signal; and
a video output device that is connected to the transmission device via a predetermined interface capable of simultaneously transmitting an audio signal and a video signal, and that outputs the video signal to an outside,
the transmission device including:
audio signal generation means for generating, as an audio signal, a control signal controlling operation of a light source in accordance with the video signal;
combined signal generation means for generating a combined signal based on the video signal and the audio signal; and
transmission means for transmitting the combined signal to the video output device via the predetermined interface,
the video output device including:
reception means for receiving the combined signal transmitted via the predetermined interface;
separation means for separating the received combined signal into the video signal and the audio signal;
conversion means for converting the audio signal into the control signal; and
control means for controlling operation of the light source based on the control signal converted by the conversion means.

2. The video processing system according to claim 1,
wherein the predetermined interface is a high definition multimedia interface (HDMI (registered trademark)).

3. The video processing system according to claim 1 or 2, wherein the video output device further includes an image modulation device, and
the image modulation device outputs the video signal to the outside in accordance with light from the light source.

4. The video processing system according to claim 3,
wherein the image modulation device is configured by a liquid crystal on silicon (LCOS (registered trademark)).

5. The video processing system according to any one of claims 1 to 4,
wherein the transmission means transmits the combined signal, using an unused band.

6. A transmission device comprising:
audio signal generation means for generating, as an audio signal, a control signal controlling operation of a light source in accordance with a video signal;
combined signal generation means for generating a combined signal based on the video signal and the audio signal; and
transmission means for transmitting the combined signal, via a predetermined interface capable of simultaneously transmitting an audio signal and a video signal, to a video output device controlling operation of the light source based on the control signal to thereby output the video signal to an outside.

7. A video processing method comprising:
generating, as an audio signal, a control signal controlling operation of a light source in accordance with a video signal;
generating a combined signal based on the video signal and the audio signal;
transmitting the combined signal via a predetermined interface capable of simultaneously transmitting the audio signal and the video signal;
receiving the combined signal transmitted via the predetermined interface;
separating the received combined signal into the video signal and the audio signal;
converting the audio signal into the control signal; and
controlling operation of the light source based on the converted control signal to output the video signal to an outside.

8. A transmission method comprising:
generating, as an audio signal, a control signal controlling operation of a light source in accordance with a video signal;
generating a combined signal based on the video signal and the audio signal; and
transmitting the combined signal, via a predetermined interface capable of simultaneously transmitting an audio signal and a video signal, to a video output device controlling operation of the light source based on the control signal to thereby output the video signal to an outside.

9. A computer-readable recording medium that stores a program causing a computer to perform:
a process of generating, as an audio signal, a control signal controlling operation of a light source in accordance with a video signal;
a process of generating a combined signal based on the video signal and the audio signal; and
a process of transmitting the combined signal, via a predetermined interface capable of simultaneously transmitting an audio signal and a video signal, to a video output device controlling operation of the light source based on the control signal to thereby output the video signal to an outside.

10. A computer-readable recording medium that stores a program causing a computer to perform:
a process of receiving a combined signal in which an audio signal is combined with a video signal, from a transmission device via a predetermined interface capable of simultaneously transmitting the audio signal and the video signal;
a process of separating the received combined signal into the video signal and the audio signal;
a process of converting the audio signal into a control signal controlling operation of a light source in accordance with the video signal; and
a process of controlling operation of the light source based on the converted control signal.
